## Europäisches Patentamt

## European Patent Office

## Office européen des brevets

(11) Veröffentlichungsnummer : **0 129 739**
**B1**

⑫ **EUROPÄISCHE . PATENTSCHRIFT**

(19)

(45) Veröffentlichungstag der Patentschrift :
06.05.87

(21) Anmeldenummer : **84106253.2**

(22) Anmeldetag : **01.06.84**

(51) Int. Cl.⁴ : **C 11 B    1/10,** C 11 B    1/06,
B 01 D 11/02

(54) **Verfahren und Vorrichtung zur Gewinnung von Fetten und Ölen.**

(30) Priorität : **25.06.83 DE 3322968**

(43) Veröffentlichungstag der Anmeldung :
**02.01.85 Patentblatt 85/01**

(45) Bekanntmachung des Hinweises auf die Patenterteilung : **06.05.87 Patentblatt 87/19**

(84) Benannte Vertragsstaaten :
**AT BE FR GB IT NL SE**

(56) Entgegenhaltungen :
**EP-A- 0 047 332**
**FR-A- 2 141 707**
**GB-A-    244 557**
**US-A- 2 608 565**

(73) Patentinhaber : **Fried. Krupp Gesellschaft mit beschränkter Haftung**
**Altendorfer Strasse 103**
**D-4300 Essen 1 (DE)**

(72) Erfinder : **Eggers, Rudolf, Dr.**
**Stader Strasse 68**
**D-2150 Buxtehude (DE)**
Erfinder : **Schade, Ernst-Gunter**
**Falkenbergersweg 94 g**
**D-2104 Hamburg 92 (DE)**

## Beschreibung

Die Erfindung bezieht sich auf ein Verfahren zur Gewinnung von Fetten und Ölen aus Ölfrüchten und Ölsaaten, bei dem die Ölfrüchte und Ölsaaten, die einen maximalen Partikeldurchmesser von 10 mm haben, gereinigt, unmittelbar anschließend ohne mechanische Konditionierung in einer Schneckenpresse kalt vorgepreßt und dann extrahiert werden. Die Erfindung bezieht sich ferner auf eine Vorrichtung zur Durchführung des Verfahrens.

Aus der DE-C-2 915 538 ist ein Verfahren zur Ölgewinnung aus Ölfrüchten und Ölsaaten durch Reinigung, kaltes Pressen und Extrahieren bekannt, bei dem die Ölfrüchte bzw. Ölsaaten unmittelbar nach der Reinigung ohne mechanische und thermische Konditionierung kalt vorgepreßt werden und der verbleibende Feststoff anschließend extrahiert wird. Zur Durchführung dieses Verfahrens wird eine Seiherschneckenpresse verwendet, die aus einer Schnecke, einem sie umgebenden, perforierten Mantel, insbesondere einem aus Stäben aufgebauten Seiher, und mindestens einer Drossel besteht, wobei sich der Schneckenkanal zum Ausgang hin verjüngt und jede der eingebauten Drosseln einen Scherspalt zwischen sich und dem Mantel bildet, der im Verhältnis zu den jeweiligen Schneckenkanälen zwischen 1 : 3 und 1 : 15 liegt.

Die in der Seiherschneckenpresse vorgepreßten Ölfrüchte und Ölsaaten werden anschließend mit einem flüssigen Lösungsmittel, vorzugsweise Hexan, extrahiert. Es ist notwendig, das extrahierte Material in einer weiteren Verfahrensstufe zu desolventieren, wozu eine größere Energiemenge erforderlich ist, da das zur Extraktion verwendete Lösungsmittel in der Desolventierungsstufe quantitativ aus dem Extraktionsrückstand abgetrennt werden muß.

Der Erfindung liegt die Aufgabe zugrunde, das Verfahren der eingangs genannten Art so weiter zu bilden, daß auf eine technisch aufwendige Desolventierung des extrahierten Materials verzichtet werden kann und daß eine kontinuierliche Verfahrensführung möglich ist. Es soll ferner eine Vorrichtung zur Durchführung des erfindungsgemäßen Verfahrens geschaffen werden, die betriebssicher arbeitet und eine kontinuierliche Verfahrensführung zuläßt.

Die der Erfindung zugrundeliegende Aufgabe wird dadurch gelöst, daß die in der Schneckenpresse vorbehandelten Ölfrüchte und Ölsaaten in Form eines druckstabilen gasdichten Preßkuchenpfropfens kontinuierlich mit dem in der Schnekkenpresse erzeugten Druck in die Extraktionsanlage gefördert werden, in der die Behandlung der vorgepreßten Ölfrüchte und Ölsaaten mit Kohlendioxid, Äthen, Äthan und/oder Propan im Gegenstrom bei einer Temperatur von 40 bis 110 °C und einem Druck von 250 bis 750 bar während einer Zeit von 0,5 bis 2,5 Stunden durchgeführt wird und wobei das Lösungsmittelverhältnis zwischen 5 und 30 kg Lösungsmittel pro kg Preßkuchen liegt, und daß die Abscheidung der extrahierten Fette und Öle aus der abgetrennten Lösungsmittelphase durch Druckerniedrigung und/oder Temperaturänderung erfolgt.

Der Vorschlag, die extrahierten Fette und Öle aus der abgetrennten Lösungsmittelphase durch Druckerniedrigung und/oder Temperaturänderung abzuscheiden, besagt, daß die Abscheidung entweder durch Senkung des Drucks oder durch Senkung der Temperatur oder durch Erhöhung der Temperatur oder durch Senkung des Drucks und Senkung der Temperatur oder durch Senkung des Drucks und Erhöhung der Temperatur erfolgen kann.

Obwohl aus der DE-A-2 127 596 ein Verfahren zur Gewinnung von Pflanzenfetten und Pflanzenölen bekannt ist, bei dem das Fett bzw. Öl mit überkritischen Gasen aus den pflanzlichen Rohstoffen extrahiert wird, und obwohl die DE-A-2 843 920 ein Verfahren zur Abtrennung von Fetten und Ölen vorschlägt, bei dem aus rohen pflanzlichen Fetten und Ölen Glyceride, freie Fettsäuren, Aldehyde, Ketone, Geruchs- und Geschmacksstoffe zusammen von der überkritischen Gasphase aufgenommen, raffiniert und fraktioniert werden, war es dennoch für den Fachmann überraschend, daß das Verfahren nach der DE-C-2 915 538 durch Anwendung der an sich bekannten Extraktion der Fette und Öle mit überkritischen Gasen weitergebildet werden kann. Es war nämlich nicht vorhersehbar, daß der beim Vorpressen der Ölfrüchte und Ölsaaten anfallende Preßkuchen aus der Schneckenpresse direkt in die Extraktionsanlage gefördert und dort ohne weitere Vorbehandlung extrahiert werden kann. Dies wird dadurch möglich, daß sich während des Vorpreßvorgangs am Ende der Schneckenpresse ein druckstabiler, gasdichter Preßkuchen-Pfropfen bildet, der sich durch den Preßvorgang ständig erneuert und in die Extraktionsanlage gefördert wird. Das Einbringen des Preßkuchens in die Extraktionsanlage erfolgt in vorteilhafter Weise kontinuierlich, was in der Praxis bisher daran scheiterte, daß keine betriebssicheren Vorrichtungen zur kontinuierlichen Beschickung der Extraktionsanlage mit Feststoffen zur Verfügung standen. Das nach der Erfindung vorgesehene kontinuierliche Einbringen des Preßkuchens in die Extraktionsanlage ermöglicht also eine betriebssichere, kontinuierliche Durchführung des gesamten Verfahrens, wobei z. B. 200 t Ölfrüchte und Ölsaaten pro Tag verarbeitet werden können.

Nach der Erfindung ist ferner vorgesehen, daß die Druckerniedrigung und/oder Temperaturänderung, durch welche die Abscheidung der extrahierten Fette und Öle aus der abgetrennten Lösungsmittelphase erreicht wird, in mehreren Stufen erfolgt. Dadurch können einzelne Fett- und Ölfraktionen gewonnen werden, die eine unterschiedliche Zusammensetzung haben.

In weiterer Ausgestaltung der Erfindung ist vorgesehen, daß die Extraktion durch Behandlung der vorgepreßten Ölfrüchte und Ölsaaten mit Kohlendioxid bei einer Temperatur von 45 bis 90 °C und einem Druck von 280 bis 750 bar während einer Zeit von 1 bis 2 Stunden durchgeführt wird, wobei das Lösungsmittelverhältnis zwischen 15 und 25 kg Kohlendioxid pro kg Preßkuchen liegt, und daß die Abscheidung der extrahierten Fette und Öle durch Druckerniedrigung auf 75 bis 100 bar erfolgt. Bei dieser Verfahrensführung kann die Extraktion mit besonders guter Ausbeute an Fetten und Ölen durchgeführt werden.

Die der Erfindung zugrundeliegende Aufgabe wird ferner durch die Schaffung einer Vorrichtung zur Durchführung des erfindungsgemäßen Verfahrens gelöst, die aus einer Seiherschneckenpresse, einem unmittelbar daran anschließenden Hochdruckreaktor und einer Apparatur zur Abscheidung der extrahierten Fette und Öle besteht, wobei die Preßkuchenaustrittsöffnung der Seiherschnekkenpresse am oberen Teil des Hochdruckreaktors angeordnet ist. Mit der entsprechend der Erfindung gestalteten Vorrichtung wird in vorteilhafter Weise erreicht, daß die Gewinnung der Fette und Öle aus den Ölfrüchten und Ölsaaten durch Vorpressung und Extraktion kontinuierlich durchgeführt werden kann, wobei eine hohe Ausbeute erzielt wird. Die erfindungsgemäße Vorrichtung ist betriebssicher und wenig störanfällig.

Ein gleichmäßiger Extraktionsverlauf und eine kurze Extraktionszeit wird dadurch erreicht, daß nach der Erfindung im Hochdruckreaktor ein langsam drehendes Rührwerk angeordnet ist, welches von der Welle der Seiherschneckenpresse angetrieben wird. Dadurch wird eine aufwendige Hochdruckdruchführung für das Rührwerk durch die Behälterwandung vermieden. Die gleichmäßige Zufuhr des Preßkuchens aus der Seiherschneckenpresse und die gleichmäßige Abführung des extrahierten Feststoffs wird nach der Erfindung dadurch verbessert, daß an der Welle der Seiherschneckenpresse eine im Hochdruckreaktor gelagerte Eintragsschnecke und im unteren Teil des Hochdruckreaktors eine Austragsschnecke angeordnet ist. Als Austragsschnecke kann nach der Erfindung in vorteilhafter Weise eine Schnekkenpresse mit einem geschlossenen Seiherkäfig verwendet werden.

Der Gegenstand der Erfindung wird nachfolgend anhand eines Ausführungsbeispiels und der Zeichnung näher erläutert. Es zeigen :

Figur 1   Fließbild des erfindungsgemäßen Verfahrens,
Figur 2   Seiherschneckenpresse mit unmittelbar anschließendem Hochdruckreaktor,
Figur 3   Apparatur zur Abscheidung der extrahierten Fette und Öle.

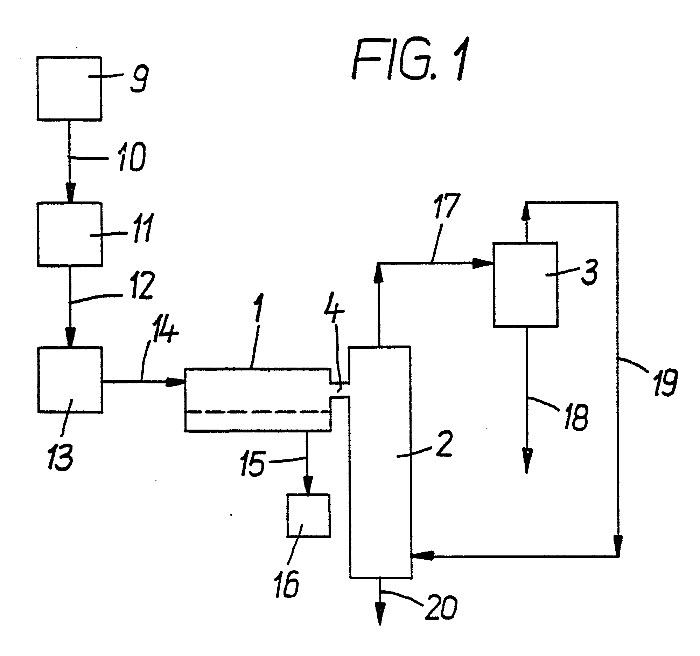

Nach dem in Fig. 1 dargestellten Verfahren werden die Ölfrüchte und Ölsaaten aus dem Vorratsbunker 9 über die Leitung 10 in die Reinigungsanlage gefördert, die aus einem Windsichter 11 und einer Siebmaschine 13 besteht, welche über die Leitung 12 miteinander verbunden sind. In der Reinigungsanlage werden die Ölfrüchte und Ölsaaten von Staub, Schutzteilchen und Pflanzenresten befreit. Die gereinigten Ölfrüchte und Ölsaaten gelangen dann über die Leitung 14 in die Seiherschneckenpresse 1, die in der DE-C-2 915 538 beschrieben ist und in der die Ölfrüchte und Ölsaaten ohne vorherige mechanische Konditionierung kalt vorgepreßt werden. Das dabei anfallende Öl wird über die Leitung 15 in den Vorraststank 16 gefördert. In der Seiherschneckenpresse 1 wird ein Druck aufgebaut, der dem bei der nachfolgenden Extraktion angewendeten Druck entspricht. Am Ende der Seiherschneckenpresse 1 tritt das gepreßte Material durch die Preßkuchen-Austrittsöffnung 4 aus und gelangt sofort in den Hochdruckreaktor 2, da die Preßkuchen-Austrittsöffnung 4 im oberen Teil des Hochdruckreaktors 2 mündet.

Im Hochdruckreaktor 2 wird das gepreßte Material im Gegenstrom mit Kohlendioxid, Äthen, Äthan und/oder Propan extrahiert. Das extrahierte Material wird aus dem Hochdruckreaktor 2 über die Leitung 20 ausgetragen, während die Lösungsmittelphase, welche die extrahierten Fette und Öle enthält, über die Leitung 17 in die Apparatur zur Abscheidung der extrahierten Fette und Öle 3 gelangt. Dort wird die beladene Lösungsmittelphase durch Druckerniedrigung und/oder Temperaturänderung in ihre Bestandteile zerlegt und die abgeschiedenen Fette und Öle werden über die Leitung 18 abgeführt, während das von den Fetten und Ölen befreite Lösungsmittel über die Leitung 19 wieder in den Hochdruckreaktor 2 gelangt.

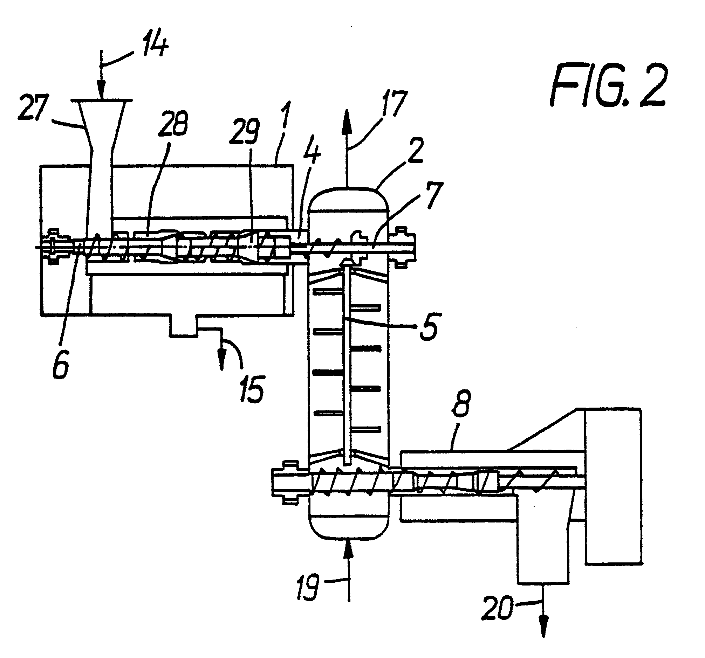

Figur 2 zeigt die zur erfindungsgemäßen Vorrichtung gehörende Seiherschneckenpresse 1 mit unmittelbar anschließendem Hochdruckreaktor 2. Über die Leitung 14 gelangen die gereinigten Ölsaaten und Ölfrüchte in den Zufuhrtrichter 27 der Seiherschneckenpresse 1 und werden vorgepreßt. Das abgepreßte Öl fließt über die Leitung 15 aus der Seiherschneckenpresse ab. Im Schneckenkanal 28 wird während des Preßvorgangs durch die Schnekke 29 ein Preßkuchen aufgebaut, der durch die Preßkuchen-Austrittsöffnung 4 kontinuierlich in den Hochdruckreaktor 2 gelangt. An der Welle 6 der Seiherschneckenpresse 1 ist eine Eintragsschnecke 7 angeordnet, welche die Preßkuchen-Austrittsöffnung 4 durchdringt und im oberen Teil des Hochdruckreaktors 2 gelagert ist. Die Eintragsschnecke 7 fördert das gepreßte Material gleichmäßig und kontinuierlich in den Hochdruckreaktor 2, der mit einem langsam drehenden Rührwerk 5 ausgerüstet ist, das den Stoffaustausch während des Extraktionsvorganges beschleunigt, den Materialtransport im Reaktor unterstützt und Verstopfungen verhindert. Das Rührwerk 5 wird von der Welle 6 der Schneckenpresse 1 angetrieben. Die Kopplung der Seiherschneckenpresse 1 mit dem Hochdruckreaktor 2 wird durch den Druckanstieg in der Presse und durch die Ausbildung eines gasdichten Pfropfens am Ende der Presse möglich.

Das Lösungsmittel wird über die Leitung 19 in den Hochdruckreaktor 2 geführt, der mit einer Innen- oder Außenheizung ausgestattet ist, um die erforderliche Extraktionstemperatur aufrecht zu erhalten und bei einem Notabblasen der Anlage ein Einfrieren zu vermeiden. Bei der Einstellung der Extraktionstemperatur ist zu berücksichtigen, daß der Preßkuchen in den meisten Fällen eine Temperatur zwischen 75 und

3

90 °C aufweist, so daß die Eintrittstemperatur des Lösungsmittels ca. 40 °C betragen muß, wenn eine Extraktionstemperatur von ca. 50 °C eingestellt werden soll. Die mit den Fetten und Ölen beladene Lösungsmittelphase verläßt den Hochdruckreaktor 2 über die Leitung 17.

Im unteren Teil des Hochdruckreaktors 2 ist eine Austragsschnecke 8 angeordnet, deren Welle als Stopfschnekke ausgebildet und in der Wandung des Hochdruckreaktors 2 gelagert ist. Auch die Austragsschnecke 8 schließt den Extraktionsraum drucksicher ab. Als Austragsschnecke 8 kann vorteilhaft eine Schneckenpresse mit geschlossenem Seiherkäfig verwendet werden. Über die Leitung 20 wird das extrahierte Material ausgetragen, wobei es entweder an der Luft oder aber in einem besonderen Vorratsbehälter durch Entgasung vom noch anhaftenden Lösungsmittel befreit wird. Der Entgasungsbehälter ist in der Zeichnung nicht dargestellt.

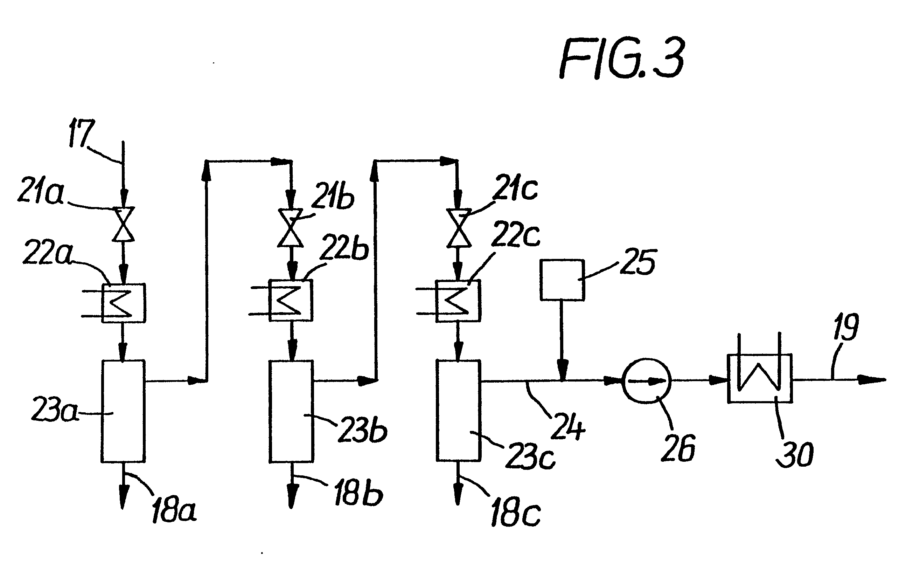

Die Leitung 17 führt die beladene Lösungsmittelphase in die Apparatur zur Abscheidung der extrahierten Fette und Öle 3, die einstufig ausgebildet sein kann oder entsprechend der Fig. 3 gestaltet ist. Bei der Apparatur nach Fig. 3 wird zunächst die beladene Lösungsmittelphase im Entspannungsventil 21a und im Wärmeaustauscher 22a auf den Abscheidungsdruck und die Abscheidungstemperatur eingestellt. Im Abscheider 23a fallen dann entsprechend den thermodynamischen Gleichgewichten Fette und Öle aus, welche die erste Fraktion bilden und über die Leitung 18a abfließen. In den beiden folgenden Abscheidungsstufen, in denen die dort ebenfalls vorhandenen Entspannungsventile mit 21b bzw. 21c, die zugehörigen Wärmeaustauscher mit 22b bzw. 22c und die Abscheider mit 23b bzw. 23c bezeichnet sind, werden durch Änderung der Abscheidebedingungen zwei weitere Fraktionen abgeschieden. Es hat sich in vielen Fällen besonders bewährt, die extrahierten Fette und Öle in mehreren Fraktionen abzuscheiden. Das von den extrahierten Fetten und Ölen befreite Lösungsmittel gelangt über die Leitung 24 in den Kompressor 26 und anschließend in den Wärmeaustauscher 30, bevor es über die Leitung 19 dem Extraktionskreislauf erneut zugeführt wird. Im Kompressor 26 und im Wärmeaustauscher 30 werden der Extraktionsdruck und die Extraktionstemperatur des Lösungsmittels eingestellt. Lösungsmittelverluste werden aus dem Vorratsbehälter 25 ersetzt.

Nach dem erfindungsgemäßen Verfahren können pro Tag 150 t Sonnenblumensaat verarbeitet werden, deren Fettgehalt bei 40 Gew.-% liegt. In der Seiherschneckenpresse 1 wird der Fettgehalt des Ausgangsmaterials auf 20 Gew.-% herabgesetzt. Die Extraktionsstufe wird bei ca. 400 bar und ca. 50 °C betrieben, wobei als Lösungsmittel Kohlendioxid zum Einsatz kommt. Das Lösungsmittelverhältnis liegt bei 20 kg Kohlendioxid pro kg Preßkuchen. Die Verweilzeit des gepreßten Materials im Hochdruckreaktor 2 liegt bei 1 bis 2 Stunden. Der Hochdruckreaktor 2 hat einen Durchmesser von 1,5 m und eine Höhe von 10 m. Das extrahierte Material verläßt den Hochdruckreaktor 2 mit einem Fettgehalt von weniger als 1 Gew.-%. Das aus der Lösungsmittelphase abgeschiedene extrahierte Sonnenblumenöl ist von guter Qualität und hat einen verhältnismäßig geringen Gehalt an Phosphatiden ($< 5$ ppm), so daß in einigen Fällen auf eine Entschleimung des Öls verzichtet werden kann.

In der nachfolgenden Tabelle sind die kritischen Daten der zur Durchführung des erfindungsgemäßen Verfahrens verwendeten Lösungsmittel aufgeführt.

| Lösungsmittel | $p_k$ (bar) | $T_k$ ($^\circ$C) |
|---|---|---|
| $CO_2$ | 73,9 | 31,1 |
| $C_2H_4$ | 50,7 | 9,5 |
| $C_2H_6$ | 49,1 | 32,2 |
| $C_3H_8$ | 42,6 | 96,7 |

**Patentansprüche**

1. Verfahren zur Gewinnung von Fetten und Ölen aus Ölfrüchten und Ölsaaten, bei dem die Ölfrüchte und Ölsaaten, die einen maximalen Partikeldurchmesser von 10 mm haben, gereinigt, anschließend ohne mechanische Konditinierung in einer Schneckenpresse kalt vorgepreßt und dann extrahiert werden, dadurch gekennzeichnet, daß die in der Schneckenpresse vorbehandelten Ölfrüchte und Ölsaaten in Form eines druckstabilen gasdichten Preßkuchenpfropfens kontinuierlich mit dem in der Schnekkenpresse erzeugten Druck in die Extraktionsanlage gefördert werden, in der die Behandlung der vorgepreßten Ölfrüchte und Ölsaaten mit Kohlendioxid, Äthen, Äthan und/oder Propan im Gegenstrom bei einer Temperatur von 40 bis 110 °C und einem Druck von 250 bis 750 bar während einer Zeit von 0,5 bis 2,5 Stunden durchgeführt wird und wobei das Lösungsmittelverhältnis zwischen 5 und 30 kg Lösungsmittel pro kg Preßkuchen liegt, und daß die Abscheidung der extrahierten Fette und Öle aus der abgetrennten Lösungsmittelphase durch Druckerniedrigung und/oder Temperaturänderung erfolgt.

2. Verfahren nach Anspruch 1, dadurch gekennzeichnet, daß die Druckerniedrigung und/oder Temperaturänderung in mehreren Stufen erfolgt.

3. Verfahren nach den Ansprüchen 1 und 2, dadurch gekennzeichnet, daß die Extraktion durch Behandlung der vorgepreßten Ölfrüchte und Ölsaaten mit Kohlendioxid bei einer Temperatur von 45 bis 90 °C und einem Druck von 280 bis 750 bar während einer Zeit von 1 bis 2 Stunden durchgeführt wird, wobei das Lösungsmittelverhältnis zwischen 15 und 25 kg Kohlendioxid pro kg Preßkuchen liegt, und daß die Abscheidung der extrahierten Fette und Öle durch Druckerniedrigung auf 75 bis 100 bar erfolgt.

4. Vorrichtung zur Durchführung des Verfahrens nach den Ansprüchen 1 bis 3, dadurch gekennzeichnet, daß sie aus einer Seiherschneckenpresse (1), einem unmittelbar daran anschließenden Hochdruckreaktor (2) und einer Apparatur zur Abscheidung der extrahierten Fette und Öle (3) besteht, wobei die Preßkuchen-Austrittsöffnung (4) der Seiherschneckenpresse (1) am oberen Teil des Hochdruckreaktors (2) angeordnet ist.

5. Vorrichtung nach Anspruch 4, dadurch gekennzeichnet, daß im Hochdruckreaktor (2) ein langsam drehendes Rührwerk (5) angeordnet ist, welches von der Welle (6) der Seiherschneckenpresse (1) angetrieben wird.

6. Vorrichtung nach den Ansprüchen 4 bis 5, dadurch gekennzeichnet, daß an der Welle (6) der Seiherschneckenpresse (1) eine im Hochdruckreaktor (2) gelagerte Eintragsschnecke (7) angeordnet ist.

7. Vorrichtung nach den Ansprüchen 4 bis 6, dadurch gekennzeichnet, daß im unteren Teil des Hochdruckreaktors (2) eine Austragsschnecke (8) angeordnet ist.

8. Vorrichtung nach Anspruch 7, dadurch gekennzeichnet, daß als Austragsschnecke (8) eine Schneckenpresse mit einem geschlossenen Seiherkäfig verwendet wird.

## Claims

1. A process for obtaining fats and oils from oil plants and oilseeds, wherein the oil plants and oilseeds, which have a maximum particle diameter of 10 mm, are cleaned, prepressed cold without mechanical conditioning in a screw press and then extracted, characterized in that the oil plants and oilseeds pretreated in the screw press are continuously conveyed at the pressure generated in the screw press in the form of a gas-tight press cake wad of stable pressure into the extraction plant, in which the prepressed oil plants and oilseeds are treated with carbon dioxide, ethene, ethane and/or propane in countercurrent at a temperature of 40 to 110 °C and a pressure of 250 to 750 bar for a period of 0.5 to 2.5 hours, the solvent ratio being between 5 and 30 kg of solvent per kg of press cake, and the extracted fats and oils are separated from the separated solvent phase by lowering the pressure and/or changing the temperature.

2. A process according to Claim 1, characterized in that the pressure is lower and/or the temperature changed in a number of stages.

3. A process according to Claims 1 and 2, characterized in that extraction is performed by treating the prepressed oil plants and oilseeds with carbon dioxide at a temperature of 45 to 90 °C and a pressure of 280 to 750 bar during a period of 1 to 2 hours, the solvent ratio being between 15 and 25 kg of carbon dioxide per kg of press cake, and the extracted fats and oils are separated by lowering the pressure to 75 to 100 bar.

4. An apparatus for the performance of the process according to Claims 1 to 3, characterized in that it comprises a screw straining press (1), a high pressure reactor (2) directly connected thereto and an apparatus for separating the extracted fats and oils (3), the press cake discharge aperture (4) of the screw straining press (1) being disposed at the upper part of the high pressure reactor (2).

5. An apparatus according to Claim 4, characterized in that disposed in the high pressure reactor (2) is a slowly rotating stirring mechanism (5) driven by the shaft (6) of the screw straining press (1).

6. An apparatus according to Claims 4 and 5, characterized in that a charging screw (7) mounted in the high pressure reactor (2) is disposed on the shaft (6) of the screw straining press (1).

7. An apparatus according to Claims 4 to 6, characterized in that a discharge screw (8) is disposed in the lower part of the high pressure reactor (2).

8. An apparatus according to Claim 7, characterized in that a screw press having a closed straining cage is used as the discharge screw (8).

## Revendications

1. Procédé pour l'obtention de graisses et d'huiles à partir de fruits et de graines oléagineux dans lequel les fruits et graines oléagineux qui présentent un diamètre maximal des particules de 10 mm, sont purifiés, puis pressés à froid dans une presse à vis sans fin, sans conditionnement mécanique, et soumis à

5

une extraction, caractérisé en ce que les fruits et graines oléagineux pré-traités dans la presse à vis sans fin sont acheminés en continu, sous la forme d'un tourteau-bouchon, résistant à la pression et étanche au gaz, sous la pression produite dans la presse à vis sans fin, vers l'installation d'extraction dans laquelle les fruits et graines oléagineux pré-pressés sont traités au dioxyde de carbone, à l'éthylène, à l'éthane et/ou au propane dans un contre-courant, à une température comprise entre 40 et 110 °C et sous une pression de 250 à 750 bars pendant une durée de 0,5 à 2,5 heures, le rapport du solvant variant entre 5 et 30 kg de solvant par kilo de tourteau et en ce que la préparation des graisses et huiles extraites de la phase séparée du solvant s'effectue en abaissant la pression et/ou en faisant varier la température.

2. Procédé selon la revendication 1 caractérisé en ce que l'abaissement de pression et/ou la variation de température s'effectue en plusieurs étapes.

3. Procédé selon les revendications 1 et 2, caractérisé en ce que l'extraction s'effectue par traitement des fruits et graines oléagineux pré-pressés avec du dioxyde de carbone à une température comprise entre 45 et 90 °C et sous une pression de 280 à 750 bars pendant une durée de 1 à 2 heures, le rapport du solvant étant compris entre 15 et 25 kg de dioxyde de carbone par kilo de tourteau, et en ce que la séparation des graisses et huiles extraites s'effectue en abaissant la pression jusqu'à une valeur comprise entre 75 et 100 bars.

4. Dispositif pour la mise en œuvre du procédé selon les revendications 1 à 3, caractérisé en ce qu'il comporte une presse-filtre à vis sans fin (1), un appareil de réaction haute pression (2) immédiatement contigu et un appareil de séparation des graisses et huiles (3) extraites, l'ouverture de sortie (4) des tourteaux de la presse-filtre (1) à vis sans fin étant disposée à la partie supérieure de l'appareil de réaction (2) à haute pression.

5. Dispositif selon la revendication 4, caractérisé en ce qu'un agitateur (5) tournant lentement, est disposé dans l'appareil de réaction (2) à haute pression et est entraîné par l'arbre (6) de la presse-filtre (1) à vis sans fin.

6. Dispositif selon les revendications 4 et 5, caractérisé en ce qu'une vis d'alimentation (7), montée dans l'appareil de réaction (2) à haute pression, est disposée sur l'arbre (6) de la presse-filtre (1) à vis sans fin.

7. Dispositif selon les revendications 4 à 6, caractérisé en ce qu'une vis d'extraction (8) est disposée à la partie inférieure de l'appareil de réaction (2) à haute pression.

8. Dispositif selon la revendication 7, caractérisé en ce que l'on utilise comme vis d'extraction (8) une presse à vis sans fin comportant une cage filtrante fermée.

6

# FIG. 1

*FIG.2*

FIG.3